(19) **Europäisches Patentamt**

**European Patent Office**

**Office européen des brevets**

(11) Publication number: **0 160 424**
**B1**

(12) **EUROPEAN PATENT SPECIFICATION**

(45) Date of publication of patent specification: **02.08.89**

(51) Int. Cl.⁴: **C 10 J 3/48**

(21) Application number: **85302430.5**

(22) Date of filing: **04.04.85**

(54) **Quench ring and dip tube assembly.**

(30) Priority: **27.04.84 US 604767**

(43) Date of publication of application:
**06.11.85 Bulletin 85/45**

(45) Publication of the grant of the patent:
**02.08.89 Bulletin 89/31**

(84) Designated Contracting States:
**DE FR GB IT NL SE**

(56) References cited:
**GB-A-2 034 446**
**US-A-2 818 326**
**US-A-2 896 927**
**US-A-4 444 726**

(73) Proprietor: **TEXACO DEVELOPMENT
CORPORATION
2000 Westchester Avenue
White Plains New York 10650 (US)**

(72) Inventor: **Muenger, James R.
26 North Avenue
Beacon, NY 12508 (US)**

(74) Representative: **Ben-Nathan, Laurence Albert
et al
Urquhart-Dykes & Lord 91 Wimpole Street
London W1M 8AH (GB)**

Courier Press, Leamington Spa, England.

## Description

This invention relates to an improved quench ring and dip tube assembly for use in combination with a quench tank and gasifier for the production of quench cooled and scrubbed synthesis gas, reducing gas or fuel gas. More specifically, the quench ring and dip tube assembly is used in the hot effluent gas quench section. This section may be located in a separate vessel which is attached to the end of the gasification section, or it may be located within a pressure vessel that also contains the gasification section for the partial oxidation of hydrocarbonaceous fuels or slurries of solid carbonaceous fuels.

The Texaco partial oxidation process is a well known process for producing synthesis gas, reducing gas, or fuel gas. In this process, gaseous or liquid hydrocarbonaceous, or solid carbonaceous fuels may be reacted with a free-oxygen containing gas in a refractory lined reaction zone to produce a hot effluent gas stream comprising $H_2$, CO, $CO_2$ and at least one material from the group comprising $H_2O$, $CH_4$, $N_2$, $H_2S$, and COS. Depending on the feedstock and operating conditions particulate matter may be entrained in the hot effluent gas stream.

All of the hot raw effluent gas stream may be cooled by direct quenching in water contained in a quench vessel located under the reaction zone such as shown and described in coassigned U.S. Patent Numbers 2,818,326; 2,871,114 and 2,896,927. Alternatively, all of the hot effluent gas stream may be cooled by indirect heat exchange with a coolant such as shown and described in coassigned U.S. Patent Numbers 2,818,326; 2,871,114 and 2,896,927. In another gas cooling procedure, the hot effluent gas stream is split into two separate gas streams. One split gas stream is then cooled by direct quenching in water in a quench tank, and the other split gas stream is cooled in a gas cooler, such as shown and described in coassigned U.S. Patent No. 3,998,609.

The stream of hot effluent gas which is produced in the upper free-flow refractory lined reaction zone is discharged downward through a bottom outlet in the reaction zone. The central longitudinal axis of the bottom outlet is coaxial with that of the gas generator. The refractory lining at the bottom of the reaction zone is supported by a floor. At least a portion of the effluent gas stream may be then cooled and scrubbed with water by discharging said effluent gas stream down through a connecting passage and then through a coaxial down flowing connecting dip-tube that terminates under a pool of water contained in a quench tank below. In order to prevent the thin-walled dip-tube from warping or being otherwise damaged, water is used to control the metal temperature. Thus, a quench water distribution ring, located at the top of the dip-tube provides a film of water over the inside surface of the dip-tube along its length. Optionally, a coaxial draft tube may surround the dip-tube and provide an annular passage through which the quenched gas may rise. A dip and draft tube in a separate quench tank, that is for example in a steel pressure vessel located downstream from the reaction zone is shown in coassigned U.S. Patent No. 2,818,326. The use of a dip leg in a quench chamber located in the bottom of a steel pressure vessel that also provides a gas cooler for cooling another split stream of gas is shown in coassigned U.S. Patent No. 3,998,609. Mounting the quench water distribution ring against the floor of the reactor vessel for cooling same, and directing cooling water against the inside of the dip-tube is shown in coassigned U.S. Patent No. 4,218,423.

A similar construction is shown in US—A—4,444,726 but in which a pair of superimposed annular cooling conduits are provided and sealed with respect to one another and with the upper conduit located against the floor of the reactor chamber with the lower conduit being located within an upper portion of the dip-tube to supply cooling liquid thereto.

With increasingly severe service requirements, including high pressure and the use of feedstocks of high sulfur and high metals content, it has become necessary to improve the design of the quench water distribution ring in order to assure adequate water supply. Analysis of metal samples from failed quench rings indicates sulfur attack upon the quench ring faces. This, in turn, is indicative of high metal temperature i.e., possibly 704°C (1300°F) or higher at the faces exposed to the high temperature synthesis gas, particularly subject to failure. These problems are avoided by the subject invention.

This invention pertains to an improved quench liquid distribution ring and dip-tube assembly for use in a hot effluent gas quench cooling zone, such as a quench tank containing a pool of quench liquid in the bottom. The quench cooling zone may be in the same or separate vessels as the reaction zone. This assembly is used in combination with a vertical cylindrical free-flow partial oxidation gas generator having at least one refractory lined chamber with a bottom central effluent gas discharge passage. The central longitudinal axis of the gas discharge passage is coaxial with the reaction zone of the gas generator.

The hot effluent gas stream from the central discharge passage passes through the coaxial dip tube and then into the pool of quench liquid where it is quench cooled and scrubbed. Optionally, a coaxial draft tube may surround the dip tube to provide an annular passage through which the quneched gas stream rises in contact with dispersed quench liquid. The reaction zone of the gas generator and the central discharge passage are lined with refractory. A supporting floor with an attached floor flange retains the refractory lining. The distribution ring assembly includes an annular rectangular shaped quench liquid distribution channel having a vertical central axis which is coaxial with that of said central effluent gas discharge passage and having inner and outer vertical cylindrical shaped walls and a flat ring shaped closed bottom that extends between said walls. The quench liquid distribution chamber surrounds the top of the dip tube, on the outside. The downstream end of the dip tube is submerged in the pool of quench liquid, and the upstream end is in communication with the central gas discharge passage. A quench ring face and cover covers the quench liquid distribution channel and has a vertical central axis which is coaxial with that of the distribution quench ring face and cover comprises a vertical cylindrical shaped leg portion which is joined at the top by a horizontal flat ring plate portion that extends outwardly and perpendicularly. The cylindrical shaped leg portion extends downward and has inside and outside faces. Further, it overlaps the inner cylindrical shaped wall of the quench liquid distribution channel on the outside to provide an annular shaped gap. Preferably, the inside diameter of the cylindrical shaped leg portion of said ring flange is greater than that of said central effluent gas discharge passage, so that the outside face of the leg portion is not blasted by the hot effluent gas stream being discharged from the central discharge passage. With nuts or bolts or by other fastening devices, the top of the quench liquid distribution channel is secured to the underside of the horizontal ring plate portion of the quench ring face and cover. The upper surface of the horizontal ring plate portion is fastened to the underside of the refractory support floor flange. A portion of the horizontal ring plate supports the underside of the refractory lining at the downstream end of the central discharge passage. Gasketing provides water and gas-tight seals between the support floor flange, refractory, and the mating surface of the quench ring face and cover. Optionally, additional annular shaped spacers may be provided for spacing the outside surface of the inner cylindrical wall of said distribution channel from the outside surface of the vertical cylindrical shaped leg portion of the quench ring face and cover, thereby providing said annular shaped gap.

A plurality of slot orifices pass through the top of the annular shaped inner wall of the distribution channel and provide passages between the distribution channel and the coaxial annular shaped gap for the flow of the quench liquid. A layer of quench liquid is thereby supplied to and uniformly distributed over the entire inside surface of the coaxial vertical cylindrical shaped dip-tube which extends downward from the inner vertical wall of the distribution channel to below the level of the quench liquid. At least one inlet hole is provided to retain at least one feed pipe for introducing quench liquid into the bottom of the distribution subject improved quench liquid distribution ring assures that the annular gap may be kept full of quench liquid and free from gas and vapor pockets. It also ensures uniform vigorous flow on the interior surface of the vertical face of the assembly that is exposed to the hot gas. Poor heat transfer is thereby avoided and the life of the quench ring and dip-tube assembly is extended.

This invention will be further understood by reference to the accompanying drawings.

Figure 1 is a schematic vertical cross section illustrating a quench ring-dip tube assembly according to the prior art;

Figure 2 is an enlarged partial detailed vertical cross section of an improved quench liquid distribution ring and dip-tube assembly according to the invention. This partial view is taken to the right of the center line passing through the symmetrical region including central passage 6.

Figure 3 is a plan view of a quarter section of the quench liquid distribution channel taken through section A—A of Figure 2.

Figure 4 is a vertical view taken through section B—B of that portion of the quench liquid distribution channel shown in Figure 3.

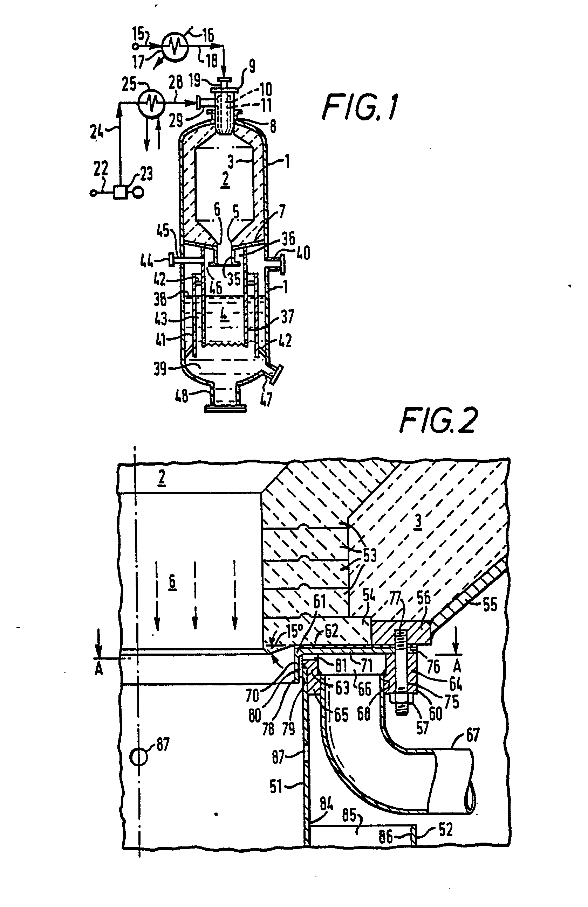

A more complete understanding of the invention may be had by reference to the accompanying drawing which illustrates in Figure 1 a quench ring and dip-tube assembly in combination with a quench tank and gasifier as provided in the prior art. A preferred embodiment of the invention is illustrated in Figures 2 to 4.

In Figure 1, closed cylindrical vertical steel pressure vessel 1 comprises two main sections: reaction zone 2 lined with refractory 3 located in the upper section of vessel 1, and quench zone 4 located in the lower section of vessel 1. In another embodiment, quench zone 4 may be contained in a separate cylindrical vertical steel pressure vessel which is connected below the separate cylindrical reaction zone vessel, such as provided in coassigned U.S. Patent No. 2,818,326. Preferably, the central vertical longitudinal axis of reaction zone 2 and quench zone 4 are coaxial. Bottom central coaxial outlet 5 and bottom connecting coaxial central vertical cylindrical shaped effluent gas discharge passage 6 places the bottom portion of reaction zone 2 in direct communication with the upper portion of quench zone 4. Thermal refractory 3 is supported at the bottom by a metal shelf, such as frusto-conical shaped refractory support floor 7.

Upper coaxial central inlet 8 of vessel 1 is provided with a burner 9 for introducing the reactant feedstreams into reaction zone 2. Any suitable burner may be used, for example, the annular type burner described in coassigned U.S. Patent No. 2,928,460. Burner 9 includes central passage 10 through which a feedstream of free-oxygen containing gas is passed and annular passage 11 through which a fuel feedstream is passed. Thus, a stream of free-oxygen containing gas in line 15 may be heated by heat exchange with steam from line 16 in heat exchanger 17 and passed through line 18, inlet 19 and central conduit 10. A liquid hydrocarbonaceous or a pumpable slurry of solid carbonaceous fuel in line 22 is pumped by means of pump 23 through line 24, optionally preheated in heat exchanger 25 and/or atomized by a vapor or gas moderator stream (not shown), line 28, and inlet 29 into annular passage 11.

The partial oxidation reaction takes place in free-flow reaction zone 2 at a temperature in the range of about 982° to 1649°C (1800° to 3000°F), such as about 1093° to 1538°C (2000° to 2800°F), and a pressure in the range of about 10 to 193 bars (10 to 190 atmospheres), such as about 30 to 101 bars (30 to 100 atmospheres). A hot raw effluent gas stream principally comprising $H_2$, CO, $CO_2$, $H_2O$ (vapor), and containing entrained particulate matter from the group particulate carbon, soot, ash, slag, unburned solid fuel and mixtures thereof is produced in reaction zone 2. The hot raw effluent gas stream passes down through bottom central outlet 5, connecting coaxial central passage 6, the inside diametric surface 35 of quench liquid distribution ring 36, dip tube 37, and is discharged below liquid level 38 of the pool of quench liquid 39 contained in the bottom of quench zone 4. Substantially any pumpable liquid coolant may be used as the quench liquid. Suitable quench liquids include water, liquid hydrocarbonaceous fluids, semi-organic fluids, and a dispersion of one of said fluids and particulate solids from the group particulate carbon, soot, ash, and mixtures thereof.

The quench cooled and scrubbed gas stream leaves quench zone 4 by way of outlet 40 in the side wall of shell 1. Optionally, a coaxial cylindrical sleeve or draft tube 41 surrounds dip 37 and is radially spaced therefrom by spacers or supports 42 to provide annular gas passage 43 through which the gas stream rises in intimate contact with the quench liquid. Liquid coolant is supplied to quench ring 36 through inlet 44 and line 45. Quench ring 36 is annular shaped and is provided with opening 46 in the bottom from which flows the water introduced through inlet 44 and line 45. A dispersion of quench liquid and the particulate solids that were removed from the hot effluent gas stream during quenching is removed from the bottom of quench tank 4 by way of side outlet 47 and sent to a conventional quench liquid recovery zone (not shown). A portion of the recovered quench liquid may be recycled to quench ring 36 by way of inlet 44 and line 45. Periodically, accumulations of solid matter may be removed for disposal through bottom outlet 48.

With the prior art quench ring design shown in Figure 1, it may become difficult to keep quench ring 36 filled with quench liquid. If vapor and gas pockets form in the upper portion of quench ring 36, the flow of quench water becomes nonuniform. Accordingly, refractory support floor 7 and diametric surface 35 of quench liquid distribution ring 36 and dip-tube 37 may increase in temperature to a point where the metal fails or is attacked by the $H_2S$ and COS in the hot effluent gas stream. Further, when exposed to such severe service conditions poor welds are more readily subject to failure. These difficulties have been eliminated by the improved invention shown in Figures 2—4.

Figure 2 is an enlarged detailed vertical cross-section showing a portion of the area surrounding the right half of central bottom outlet 5 and coaxial central effluent gas discharge passage 6. The relationship of this region with respect to the partial oxidation reaction zone and to the quench zone is similar to that shown in Figure 1. However, the prior art quench ring 36 of Figure 1 has been replaced by the subject invention which includes an improved quench liquid distribution ring and dip-tube assembly. The area surrounding the central discharge passage 6 to the left of the center line (not shown) is substantially symmetrical with the area to the right of the center line that is shown in Figure 2. At the bottom of reaction chamber 2, thermal refractory line 3 includes a plurality of refractory face bricks 53 and 54 that line the central effluent gas discharge passage 6. Frusto-conical refractory support floor 55 is attached, for example by welding, at the upper end to the inside wall of the steel pressure vessel (not shown). At the lower end, floor 55 is attached to a flat ring shaped floor flange 56. Quench liquid distribution ring and dip tube assembly is attached to the underside of floor flange 56 by conventional attachment means, such as bolting 57, or other fastening devices.

Quench liquid distribution ring and dip-tube assembly comprises distribution channel body 60, quench ring face and cover 61, dip-tube 51, and gasketing 62. A top portion of draft tube 52 is shown and may be optionally included with said assembly.

Quench liquid distribution channel body 60 is coaxial with the central longitudinal axis of central effluent gas discharge passage 6. It is annular shaped and has inner 63 and outer 64 vertical cylindrical shaped walls and a flat ring shaped closed bottom 65 extending between said walls. When unassembled, the upper rectangular-shaped channel portion 66 of quench liquid distribution channel body 60 is open. When assembled, channel body 60 is covered with the upper flat ring portion 71 of the quench ring face and cover 61. Optionally, conventional gasketing may be inserted between channel body 60 and quench ring face and cover 61 to provide a gas and liquid tight seal. Fresh quench liquid is introduced into channel portion 66 by way of a plurality of feed pipes 67. Improved mechanical connections may be obtained by drilling inlet holes 68 in channel body 60 every 90°. The holes pass from the underside into channel portion 66 to provide pipe entrances. The end of each pipe is inserted into a hole 68 and welded in place. The inside diameter of inner wall 63 may be increased along a portion its length starting from the bottom to accommodate the wall thickness of dip tube 51. By this means distribution channel body 60 may be slid down over the external diameter of dip tube 51 near its upper end, thereby avoiding a stepped wall. These two parts are then secured in place, for example by welding. The weld seams are ground smooth. Unlike the welds in prior art construction, any welded joints in channel body 60 can be fully inspected. Preferably, channel body 60 is made from one piece of metal. For example, channel body 60 may be machined from a solid billet of stainless steel. This will provide a very rigid clamp for quench ring face and cover 61 and good support for supply pipes 67 and the dip tube 51.

Quench ring face and cover 61 for quench liquid distribution channel 60 has a vertical central axis which is coaxial with that of distribution channel 60 and that of gas discharge passage 6. Quench ring face and cover 61 comprises a vertical cylindrical shaped leg portion 70 that extends downward and overlaps the inner vertical wall 63 of distribution body 60, and a horizontal flat ring plate portion 71 that extends perpendicularly and outwardly from the top of said leg portion. As previously mentioned, flat ring plate portion 71 covers channel portion 66 upon installation. For example, by aligning bolt holes 75 and 76 in channel body 60 and flat ring plate 71, respectively, said parts may be bolted to the undersides of floor flange 56 and refractory 54 by screwing nut and bolt 57 into threaded hole 77 in floor flange 56. Cylindrical shaped leg portion 70 has inside and outside faces 78 and 79, respectfully. Outside face 79 is radially spaced from the inside diameter of inner wall 63 to provide annular gap 80. Further, leg portion 70 overlaps on the outside the welds joining dip tube 51 to the inner vertical cylindrical shaped wall 63 of distribution channel body 60 thereby protecting the welded area from exposure to the hot unquenched raw gas stream.

In order to limit the direct contact of inside face 78 to the stream of hot effluent gas being discharged from the downstream end of central passage 6, the inside diameter of the vertical cylindrical shaped leg portion of the quench ring face and cover 61 is increased radially beyond the diameter of passage 6. A portion of the flat underside of refractory lining 54 at the downstream end of central passage 6 overhangs the vertical leg portion 70 of quench ring face and cover 61. To confine gasket 62, the flat bottom front portion of refractory 54 that extends beyond inside face 78 may slope downward at an angle of about 10—30°, such as about 15°. Optionally, a refractory protective ring (not shown) may be fixed to the front of inside face 78.

The narrow annular gap 80 that extends from about 50—100% of the interior height of the quench ring i.e., from the top of distribution channel body 60 to the bottom of cylindrical shaped leg portion 70, and which preferably extends about 2/3 the height of the quench ring, is maintained between the external peripheral surfaces of inner wall 63 with dip tube 51 attached thereto and outside face 79 of cylindrical shaped leg portion 70. Spacing lugs (not shown) to maintain the gap width may be provided. A plurality of slot orifices 81 located in the top of inner wall 63 provide communicating passages for the free-flow of fresh quench liquid flowing from the channel portion 66 of distribution body 60 to annular gap 80.

A portion of the outside surface 84 of dip tube 51 located above the level of the coolant contained in the bottom of the quench tank (not shown) is cooled by an upflowing mixture of quenched gas and water spray. For example, the quenched gas may pass up through annular passage 85 located between outside surface 84 of dip tube 51 and inside surface 86 of draft tube 52. Typically, the diameter of dip tube 51 is in the range of about 12 to 48 inches, such as about 18 to 36 inches.

A ring of several small diameter weep holes 87 are located near the upper end of dip-tube 51 and above the level of the quench liquid contained in the quench tank. By this means, the pressure on both sides of dip-tube 51 may be equalized, and quench fluid is thereby prevented from being forced out of the quench tank up the dip-tube to the hot refractory should downstream pressure ever exceed generator pressure through some mal operation.

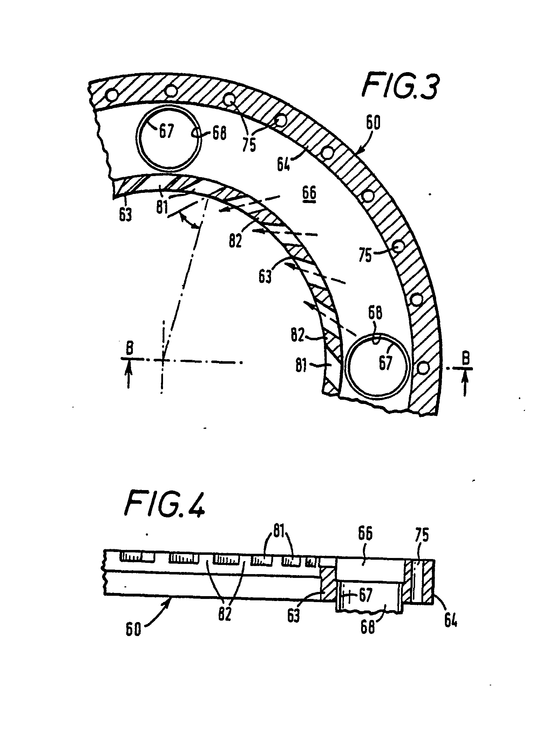

Figure 3 is a plan view of a quarter section of the quench liquid distribution channel body 60 taken through section A—A of Figure 2. Figure 4 is a vertical view taken through section B—B of that portion of the quench liquid distribution channel body 60 shown in Figure 3. The layout of the plurality of bolt holes 75 in outer vertical cylindrical shaped wall 64 in the quarter section is clearly shown. The annular shaped quench liquid distribution channel 66 and connecting slot orifices 81 are also shown along with entrance holes 68 and the ends of quench liquid feed pipes 67.

A plurality of rectangular slot orifices 81 for providing passage of the quench liquid from distribution channel 66 to annular gap 80 (not shown) are located around inner wall 63 of distribution channel 60. The direction of flow is shown by the dotted arrows. The slot orifices are separated from each other by uncut portions 82 of inner wall 63 in the amount of about 5 to 51 mm (3/16—2 inches) such as about 6 to 25 mm (1/4—1 inch). For example, the center to center distance between adjacent orifices may be about 2 inches to 4 inches, or less. While the slots may be readily directed, preferably they are offset from radial about 0° to 60°, such as about 30° to 45° to facilitate distribution of the quench liquid in annular gap 80, to smooth the flow transition from horizontal to vertical, and to avoid stagnation points which could lead to high temperature areas. The slots are shown in Figure 3 to be offset about 45° from radial. The jets of quench liquid are thereby given a tangential velocity component at the quench face. Non-radial jet orifices better sweep the quench ring chamber. Slot orifices 81 leading from distribution channel 66 to annular gap 80 are sized to give a velocity to the quench liquid which is approximately 3/4 to 10 times, such as about 1.5—3 times the velocity of the quench liquid in gap 80. For example, the quench liquid velocity through orifices 81 may be in the range of about 0.9 to 18 m/s (3 to 60 feet per second), such as about 3 to 9 m/s (10 to 30 feet per second) to insure good scrubbing of the inside surface 79 of leg portion 70 of Figure 2. The pressure drop assures equal flow through all orifices. Slot orifices 81 are so located that the quench liquid enters at the top of annular gap 80. All of the vapor and gas in gap 80 is thereby purged; and gas and vapor pockets which would otherwise give poor heat transfer are eliminated.

Annular gap 80 is operated full of quench liquid, and a uniform flow of water passes down through gap opening 80. Further a layer of quench liquid with a velocity in the range of about 0.6 to 6 m/s (2 to 20 feet per second), such as about 0.9 to 2 m/s (3 to 8 feet per second) is thereby provided to the inside surface 83 of dip tube 51, as shown in Figure 2. Dip tube 51 is thereby prevented from thermal damage, and sticking of particles of soot, slag, or ash is prevented.

In one embodiment, the minimum velocity of quench liquid in annular gap 80 that will ensure that annular gap 80 is full of quench liquid may be expressed by the following Equation I:

$$V = \sqrt{2g\ H/c}$$

wherein:
V=minimum velocity of quench liquid through the annular gap that will ensure that annular gap 80 is full of quench liquid
g=gravitational constant
H=interior height of annular gap (feet)
c=empirical constant approximately equal to 1.25.

In suitable designs, H may vary in the range of about 25 to 152 mm (1 inch to 6 inches), such as about 38 to 76 mm (1.5 inch to 3 inches). The width of gap 80 may vary in the range of about 3 to 25 mm (1/8 inch to 1 inch) such as about 5 to 8 mm (3/16 inch to 5/16 inch).

**Claims**

1. A quench liquid distribution ring and dip-tube assembly in combination with a refractory lined reaction chamber which are located in the same vertical cylindrical free-flow gasifier, said quench liquid distribution ring and dip-tube assembly being for use in a hot effluent gas quench cooling zone partially filled with quench water which is located in the bottom section of said vertical cylindrical free-flow gasifier for the partial oxidation of a sulfur and metals-containing liquid hydrocarbonaceous fuel or a pumpable slurry of solid carbonaceous fuel at a temperature in the range of about 982° to 1649°C (1800° to 3000°F) to produce a stream of a raw synthesis gas, reducing gas or fuel gas, comprising $H_2$, CO, $CO_2$, $H_2O$, and containing entrained particulate matter from the group consisting of particulate carbon, soot, ash, slag, unburned solid fuel, and mixtures thereof, wherein said refractory lined reaction chamber has a refractory lined bottom central effluent gas discharge passage whose central longitudinal axis is coaxial with that of the gasifier, and said reaction chamber is in the upper section of said gasifier and has a supporting floor with a floor flange for said refractory lining, characterized by an annular shaped quench water distribution channel having a vertical central axis which is coaxial with that of said central effluent gas discharge passage and having inner and outer vertical cylindrical shaped walls and a flat ring shaped closed bottom that extends between said walls; a quench ring face and cover for said quench water distribution channel having a vertical central axis which is coaxial with that of said distribution channel and comprising a vertical cylindrical shaped leg portion that extends downward and which has inside and outside faces, and a horizontal flat ring plate portion that extends perpendicularly and outwardly from the top of said leg portion, wherein the downstream outlet of said refractory lined central effluent gas discharge passage terminates near the top of said quench ring face and cover, and wherein the inside surface of said inner cylindrical wall of said distribution channel is radially and uniformly spaced from the outside surface of the vertical cylindrical shaped leg portion of said quench ring face and cover to provide an annular shaped gap of uniform width from top to bottom; wherein the inside diameter of the vertical cylindrical shaped leg portion of said quench ring face and cover is increased radially beyond the diameter of the central effluent gas discharge passage, and a rear portion of the flat underside of the refractory lining at the downstream end of said central passage is supported by said quench ring cover while a front portion overhangs the vertical leg portion of the quench ring face and cover and slopes downward at an angle in the range of about 10° to 30°; means for securing the top of said quench water distribution channel to the underside of the horizontal ring plate portion of said quench ring face and cover, and for securing the upper surface of said horizontal ring plate portion to said refractory support floor flange; gasketing means between at least one surface of said horizontal ring plate portion of the quench ring face and cover and at least one mating surface; a plurality of slot orifices of uniform cross-section passing through the top of said inner wall of said distribution channel and providing a plurality of passages between said distribution channel and said annular shaped gap, wherein a straight extension of the furthest side of each slot orifice from the central longitudinal axis makes an angle with a radial in a horizontal plane that intersects the central longitudinal axis of said quench water distribution channel and said slot orifice; a coaxial vertical cylindrical shaped dip-tube extending downward from the inner vertical wall of said distribution channel to below the level of said quench water; and at least one inlet means provided in the bottom of said distribution channel for introducing quench water; whereby said annular shaped gap is operated full of said quench water and free from gas and vapor pockets, and a spiralling layer of quench water is supplied to and distributed over the entire inside surfaces of the inner wall of said water distribution channel and the cylindrically shaped dip-tube.

2. Apparatus according to Claim 1 provided with a coaxial vertical cylindrical shaped draft tube that surrounds said dip-tube along its length.

3. Apparatus according to Claim 1 or Claim 2 provided with a thermal refractory protective lining on the inner face of the vertical cylindrical shaped leg of said ring flange.

4. Apparatus according to any preceding Claim wherein said quench liquid distribution channel is constructed in one piece.

5. Apparatus according to any preceding Claim wherein the upstream end of said dip-tube is welded to the inner vertical wall of the distribution channel and said welds are overlapped by the vertical cylindrical shaped leg portion of said quench ring face and cover thereby protecting the welded area with a layer of water.

6. Apparatus according to any preceding Claim provided with a ring of weep holes located in the wall of said dip tube near its upstream end.

7. Apparatus according to any preceding Claim wherein said annular gap extends from about 50—100% of the height of the quench liquid distribution channel.

8. Apparatus according to any preceding Claim wherein said slot orifices are rectangular.

**Patentansprüche**

1. Kühlflüssigkeitsverteilungsring und Tauchrohr-Anordnung in Kombination mit einer feuerfest ausgekleideten Reaktionskammer, die in demselben vertikalen zylindrischen Freistrom-Vergaser angeordnet sind, wobei der Kühlflüssigkeitsverteilungsring und die Tauchrohranordnung zur Verwendung in einer heiß ausströmendes Gas kühlenden Zonedienen, die teilweise mit Kühlwasser gefüllt ist, das in dem Bodenabschnitt de vertikalen zylindrischen Freistrom-Vergasers angeordnet ist, zur teilweisen Oxidation eines Schwefel und Metalle beinhaltenden flüssigen kohlenwasserstoffhaltigen Brennstoffs oder eines pumpfähigen Schlamms eines festen, kohlenstoffhaltigen Brennstoffs bei einer Temperatur in dem Bereich von etwa 982°C bis 1649°C (1800° bis 3000°F) zur Erzeugung eines Stromes von synthetischem Rohgas, Reduktionsgas oder Brenngas, mit $H_2$, CO, $CO_2$, $H_2O$ und mit mitgeführten Partikeln aus der Gruppe bestehend aus Kohlenstoffpartikeln, Ruß, Asche, Schlacke, unverbranntem festen Brennstoff und Mischungen daraus, wobei die feuerfest ausgekleidete Reaktionskammer eine feuerfest ausgekleidete, ausströmendes Gas ausführende, unter zentrale Passage, deren zentralen Längsachse koaxial mit derjenigen des Vergasers ist, hat, und die Reaktionskammer in dem oberen Abschnitt des Vergasers ist und einen Stützboden mit einem Bodenflansch für die feuerfeste Auskleidung hat, gekennzeichnet durch einen ringförmigen Kühlwasserverteilungskanal mit einer vertikalen Zentralachse, die koaxial mit derjenigen der zentralen, ausströmendes Gas auslassenden Passage ist und mit inneren und äußeren vertikalen zylindrisch geformten Wandungen und einem flache, ringförmigen, geschlossenen Boden, der sich zwischen den Wandungen erstreckt; eine Ringfläche und Abdeckung für den Kühlwasserverteilungskanal, der eine vertikale Mittelachse, die koaxial mit derjenigen des Verteilungskanals ist, hat, und einen vertikalen, zylindrisch geformten Schenkelabschnitt der sich nach unten erstreckt und Innenflächen und Außenflächen hat, und einen horizontalen, flachen Ringplattenabschnitt, der sich senkrecht und von dem oberen Teil des Schenkelabschnitts erstreckt, aufweist, wobei der stromabwärts gelegene Auslaß der feuerfest ausgekleideten, das ausströmende Gas auslassenden Passage in der Nähe des oberen Endes der Ringfläche und Abdeckung endet, und wobei die Innenfläche der inneren zylindrischen Wandung des Verteilungskanals radial und gleichförmig von der Außenfläche des vertikalen, zylindrisch geformten Schenkelabschnitts der Kühlringfläche und der Abdeckung beabstandet ist zur Schaffung eines ringförmigen Spalts gleichförmiger Breite von dem oberen Ende zu dem unteren Ende; wobei der Innendurchmesser des vertikalen, zylindrisch geformten Schenkelabschnitts der Kühlringfläche und der Abdeckung sich radial über den Durchmesser der zentralen, das ausströmende Gas auslassenden Passage erhöht ist, und der rückwärtige Abschnitt der flachen Unterseite der feuerfesten Auskleidung an dem stromabwärts gelegenen Ende der zentralen Passage durch die Kühlringabdeckung gestützt wird, während ein vorderer Abschnitt über dne vertikalen Schenkelabschnitt und der Abdeckung überhängt und in einem Winkel in dem Bereich von etwa 10° bis 30° geneigt ist; Mittel zum Befestigen des oberen Teiles des Kühlwasserverteilungskanals an der Unterseite des horizontalen Ringplattenabschnitts der Kühlringfläche und der Abdeckung und zum Befestigen der oberen Fläche des horizontalen Ringplattenabschnitts an dem feuerfesten Stützbodenflansch; Dichtungsmitteln zwischen wenigstens einer Fläche des horizontalen Ringplattenabschnitts der Kühlringfläche und der Abdeckung und wenigstens einer passenden Oberfläche; eine Mehrzahl von Schlitzöffnungen mit gleichmäßigem Querschnitt, die sich durch das obere Ende der inneren Wandung des Verteilungskanales erstrecken und eine Vielzahl von Passagen zwischen dem Verteilungskanal und dem ringförmig geformten Spalt bilden, wobei eine gerade Erstreckung der am weitesten außen gelegenen Seite jeder Schlitzöffnung von der zentralen longitudinalen Achse einen Winkel mit einer radialen in einer horizontalen Ebene hat, die die Mittellängsachse des Kühlwasserverteilungskanals und die Schlitzöffnung schneidet; ein koaxiales, vertikales, zylindrisch geformates Tauchrohr, das sich von der inneren vertikalen Wand des Verteilungskanals nach unten unterhalb der Ebene des Kühlwassers erstreckt; und wenigstens ein Einlaßmittel, daß an dem Boden des Verteilungskanals angeordnet ist zum Einführen von Kühlwasser; wodurch der ringförmige Spalt voll mit Kühlwasser und frei von Gas und Dampftaschen betrieben wird, und eine gewundene Schicht von Kühlwasser zu der gesamten Innenfläche der Innenwandung des Wasserverteilungskanals und dem zylindrisch geformten Tauchrohr geführt und über diese verteilt wird.

2. Vorrichtung nach Anspruch 1, mit einem koaxialen, vertikalen, zylindrisch geformten Zugrohr, daß das Tauchrohr über seine Länge umgibt.

3. Vorrichtung nach Anspruch 1 und Anspruch 2, mit einer thermisch feuerfesten Schutzauskleidung auf der Innenfläche des vertikalen, zylindrisch geformten Schenkels des Ringflansches.

4. Vorrichtung nach einem vorangehenden Anspruch, wobei der Kühlflüssigkeitsverteilungskanal einstückig ausgebildet ist.

5. Vorrichtung nach einem vorangehenden Anspruch, wobei das stromabwärts gelegene Ende des Tauchrohrs mit der inneren vertikalen Wand des Verteilungskanals verschweißt ist und die Schweißstellen von dem vertikalen, zylindrisch geformten Schenkelabschnitt der Kühlringfläche und der Abdeckung überlappt werden, wodurch die Schweißzone mit einer Wasserschicht geschützt wird.

6. Vorrichtung nach einem vorangehenden Anspruch, mit einem Ring von Tropflöchern, die in der Wandung des Tauchrohres benachbart seinem stromabwärts gelegenen Ende angeordnet sind.

7. Vorrichtung nach einem vorangehenden Anspruch, wobei der ringförmige Spalt sich über etwa 50—100% der Höhe des Kühlflüssigkeitsverteilungskanals erstreckt.

8. Vorrichtung nach einem vorangehenden Anspruch, wobei die Schlitzöffnungen rechteckig sind.

**Revendications**

1. Anneau de distribution de liquide d'extinction et assemblage de tuyau à immersion en combinaison avec une chambre de réaction munie d'un garnissage réfractaire situés dans le même gazéificateur cylindrique vertical à écoulement libre, ledit anneau de distribution de liquide d'extinction et ledit assemblage de tuyau à immersion étant utilisés dans une zone d'extinction de gaz effluents chauds partiellement remplie d'eau d'extinction, située dans la partie de fond dudit gazéificateur cylindrique vertical à écoulement libre pour réaliser l'oxydation partielle d'un combustible hydrocarboné liquide contenant un sulfure et des métaux ou une boue pompable de combustible carbonée solide à une température située dans la zone d'environ 982° à 1649°C (1800° à 3000°F), pour produire un écoulement d'un gaz de synthèse brut, d'un gaz de réduction ou d'un gaz combustible, comprenant $H_2$, CO, $CO_2$, $H_2O$ et contenant des matières particulaires entraînées appartenant au groupe comprenant les particules de carbone, de suie, de cendre, de scories, du combustible solide imbrûlé et des mélanges de ceux-ci, dans lequel ladite chambre de réaction garnie de réfractaire possède un passage central de fond de décharge de gaz effluent, garni de réfractaire dont l'axe longitudinal est par rapport à celui du gazéificateur, et ladite chambre de réaction étant située dans la partie supérieure dudit gazéificateur et présente un plancher support avec une bride de plancher pour ledit garnissage réfractaire, caractérisé par un canal de distribution d'eau de trempe de forme annulaire présentant un axe central vertical coaxial à celui dudit passage central de décharge de gaz effluent et présentant des parois intérieure et extérieure de forme verticale cylindrique et un fond fermé en forme d'anneau plat qui s'étend entre lesdites parois; un côté et un couvercle d'anneau d'extinction pour ledit canal de distribution d'eau de trempe qui présente un axe vertical coaxial par rapport à celui dudit canal de distribution et comprenant une partie de patte de forme verticale cylindrique qui s'étend vers le bas et qui présente des faces intérieures et extérieures, et une partie de plaque d'anneau plat horizontale qui s'étend perpendiculairement et vers l'extérieur du haut de ladite partie de patte, la sortie aval dudit passage central de décharge de gaz effluent garnie de réfractaire terminant à proximité du dessus desdits côté et couvercle d'anneau d'extinction, et dans lequel la surface intérieure de ladite paroi intérieure cylindrique dudit canal de distribution est espacée radialement et uniformément de la surface extérieure de ladite partie de patte vertical de forme cylindrique desdits côté et couvercle d'anneau d'extinction pour fournir un intervalle de forme annulaire et de largeur uniforme entre dessus et fond; dans lequel le diamètre intérieur de la partie de patte verticale de forme cylindrique desdits côté et couvercle d'anneau d'extinction est agrandie radialement au delà du diamètre du passage central de décharge de gaz effluent, et une partie arrière du côté inférieur plat du garnissage réfractaire à l'extrémité aval dudit passage central est supportée par ledit couvercle d'anneau d'extinction tandis qu'une partie frontale surplombe la partie verticale de patte des côté et couvercle de l'anneau d'extinction et est en pente vers le bas sous un angle situé dans la zone d'environ 10° à 30°; des moyens pour fixer le haut du canal de distribution d'eau d'extinction au côté inférieur de la partie horizontale de plaque d'anneau d'extinction desdits côté et couvercle d'anneau d'extinction et pour fixer la surface supérieure de la partie horizontale de plaque d'anneau à ladite bride de plancher de support du réfractaire; des moyens de joints entre au moins une surface de ladite partie horizontale de plaque d'anneau desdits côté et couvercle d'anneau d'extinction et au moins une surface de raccordement; une pluralité d'orifices en fente de section transversale uniforme passant à travers le haut de ladite paroi intérieure dudit canal de distribution et fournissant une pluralité de passages entre ledit canal de distribution et ledit intervalle de fente annulaire, dans lequel une extension droite du côté le plus éloigné de chaque orifice en fente depuis l'axe central longitudinal, fait un angle par rapport au rayon, dans un plan horizontal coupant l'axe central longitudinal dudit canal de distribution d'eau d'extinction et ledit orifice en fente; un tube d'immersion coaxial vertical, de forme cylindrique, s'étendant vers le bas de la paroi intérieure verticale dudit canal de distribution jusqu'au-dessous du niveau de ladite eau d'extinction; et au moins un moyen d'entrée prévu au fond dudit canal de distribution pour introduire l'eau d'extinction; ledit intervalle de forme annulaire fonctionnant plein de ladite eau d'extinction et exempt de gaz ou de poches de vapeur, et une couche en spirale d'eau d'extinction étant fournie et répartie sur l'intégralité des surfaces intérieures de paroi intérieure dudit canal de distribution d'eau et du tube d'immersion de forme cylindrique.

2. Appareil selon la revendication 1, pourvu d'un tube aspirateur coaxial vertical de forme cylindrique entourant ledit tube d'immersion sur as longueur.

3. Appareil selon la revendication 1 ou 2, pourvu d'un garnissage réfractaire de protection thermique sur le côté intérieur de la patte verticale de forme cylindrique de la dite bride annulaire.

4. Appareil selon l'une quelconque des revendications précédentes, dans lequel ledit canal de distribution de liquide d'extinction est construit d'une seule pièce.

5. Appareil selon l'une quelconque des revendications précédentes, dans lequel l'extrémité amont dudit tube d'immersion est soudée à la paroi verticale intérieure du canal de distribution et lesdites soudures sont chevauchées par la partie de patte verticale de forme cylindrique desdits côté et couvercle d'anneau d'extinction, protégeant de ce fait la zone soudée par une couche d'eau.

6. Appareil selon l'une quelconque des revendications précédentes, prévu avec un anneau de trous d'évacuation situés dans la paroi dudit tube à immersion, à proximité de son extrémité amont.

7. Appareil selon l'une quelconque des revendications précédentes, dans lequel ledit intervalle annulaire s'étend sur approximativement 50—100% de la hauteur du canal de distribution de liquide d'extinction.

8. Appareil selon l'une quelconque des revendications précédentes, caractérisé en ce que lesdits orifices à fente sont rectangulaires.

FIG.1

FIG.2

*FIG.3*

67 68 75 60 64 66 63 81 82 63 82 68 81 67 75

B B

*FIG.4*

81 66 75 82 63 67 64 60 68